Europäisches Patentamt

European Patent Office

Office européen des brevets

(11) Veröffentlichungsnummer: **0 117 463**
**B1**

# EUROPÄISCHE PATENTSCHRIFT

(45) Veröffentlichungstag der Patentschrift: 29.11.89

(51) Int. Cl.⁴: **C 02 F 3/20**, C 02 F 1/20, C 02 F 3/12

(21) Anmeldenummer: **84101258.6**

(22) Anmeldetag: **08.02.84**

(54) **Verfahren und Einrichtung zur Be- und Entgasung von Flüssigkeiten.**

(30) Priorität: 24.02.83 AT 635/83
24.02.83 AT 636/83

(43) Veröffentlichungstag der Anmeldung:
05.09.84 Patentblatt 84/36

(45) Bekanntmachung des Hinweises auf die Patenterteilung:
29.11.89 Patentblatt 89/48

(84) Benannte Vertragsstaaten:
AT BE CH DE FR GB IT LI LU NL SE

(56) Entgegenhaltungen:
CH-A- 522 431
FR-A- 2 357 484
FR-A- 2 390 989
US-A- 2 374 772

(73) Patentinhaber: **WAAGNER-BIRO AKTIENGESELLSCHAFT,**
**Stadlauer-Strasse 54 Postfach 11, A-1221 Wien (AT)**

(72) Erfinder: **Glasner, Alfred, Dipl.-Ing., Alte Poststrasse 55, A-8020 Graz (AT)**
Erfinder: **Hillinger, Bruno, Dipl.-Ing. Dr., Dreisteingasse 20, A-2371 Hinterbrühl (AT)**
Erfinder: **Müllner, Johannes, Dipl.-Ing. Dr., Hietzinger Hauptstrasse 146/4/3, A-1130 Wien (AT)**

(74) Vertreter: **Wallner, Gerhard, Dipl.-Ing., Waagner-Biro Aktiengesellschaft Patentreferat Postfach 11, A-1221 Wien (AT)**

**Beschreibung**

Die Erfindung betrifft ein Verfahren zur Be- und Entgasung von in Rohren strömenden Flüssigkeiten, insbesondere beim biologischen Abbau hochbelasteter Abwässer, bei dem die Flüssigkeit von einem gegebenen hydrostatischen Druckniveau durch Heben auf ein geringeres hydrostatisches Druckniveau entspannt und nach einer Umlenkung die begaste Flüssigkeit über ein Fallrohr in einen Behälter oder ein Becken mit den gleichmäßig verteilten, verdichteten und zum Teil gelösten Gasblasen rückgeführt sowie ungelöstes Gas abgegeben wird.

Es ist bekannt, Flüssigkeiten, wie z. B. Wasser, in Einrichtungen, die nach Art eines Hebers ausgebildet sind, zu begasen, insbesondere zu belüften, wobei während der Umlenkung gemäß der FR-A-2 357 484 bzw. dem abwärts gerichteten Wasserstrom gemäß der CH-A5-522 431 das Gas durch Selbstansaugung oder auch unter Druck durch quer zur Strömungseinrichtung angeordnete Wandöffnungen im Fallkanal aufgegeben wird. Nachteilig ist, daß hier zuerst nur die Randzonen der im Rohr bewegten Flüssigkeiten begast werden und daß erst später durch Querturbulenzen eine Durchmischung der Gasblasen mit dem übrigen Flüssigkeitsstrom erreicht wird. Dieser Nachteil wurde durch die AT-A-319 864 zum Teil bekämpft, indem der Sinkkanal als Flachkanal ausgebildet wurde. Ein anderer Vorschlag bestand gemäß der CH-A-625 133 darin, daß durch Röhrchen oder durch andere Einbauten das Gas in das Zentrum der Flüssigkeitsströmung eingebracht wird. Die Kanalverengung kann durch mitgeführte Schmutzteilchen verlegt werden. Nachteilig ist ferner, daß die Gasblasen in der abwärts bewegten Flüssigkeit einen Auftrieb erleiden, wodurch der Abstand der Blasen verringert wird und es zu Blasenverschmelzungen kommt.

Ein weiterer Verfahrensnachteil besteht darin, daß bei Begasungen im Sinkkanal ein Teil der möglichen Begasungsstrecke verschenkt wird, da das Druckminimum der Flüssigkeit an der höchsten Stelle des Hebers auftritt, wobei gleichzeitig an der höchsten Stelle ein Entgasungseffekt auftritt, der bis jetzt nicht ausgenützt wurde. Weiters bedeuten Querschnittsveränderungen und/oder Einbauten einen ständigen Energieverlust, der durch die Erfindung vermieden werden kann.

Die Erfindung hat es sich zur Aufgabe gestellt, den genannten Nachteilen zu begegnen, und eine wirksamere Begasung zu ermöglichen, indem die losgerissenen Blasen sofort in das Innere der Strömung transportiert werden. Das erfindungsgemäße Verfahren ist dadurch gekennzeichnet, daß das Gas im Unterdruckbereich der entspannten Flüssigkeit unmittelbar vor der Umlenkung in den Sinkkanal an mehreren in bekannter Weise in Strömungsrichtung hintereinander liegenden Stellen bläschenförmig durch die Rohrwandung in den Randbereich der Flüssigkeit eingebracht wird. Wesentliche Verfahrensausgestaltungen sind in den Unteransprüchen 2 und 3 angeführt.

Die erfindungsgemäße Einrichtung zur Durchführung des Verfahrens ist dadurch gekennzeichnet, daß die Umwälzleitung als zentrales vertikales Steigrohr mit konzentrisch hiezu angeordneten, in Strömungsrichtung sich erweiterndem Sinkkanal und als ringförmigen Verteilkanal ausgebildeten Krümmer ausgebildet ist, an dessen Unterseite ein ringförmiger poröser Wandungsteil wie z. B. Lochplatte vorgesehen ist, der über eine ringförmige Gaskammer, die unmittelbar vor der Umlenkung des Flüssigkeitsstromes angeordnet ist, mit mindestens einer Gaszuführung verbunden ist.

Insbesondere ist die Lochplatte durch Rippen, die zumindest teilweise hohl und als Gaszuführung ausgebildet sind, an der oberen Kanalwandung des Verteilkanales gehalten.

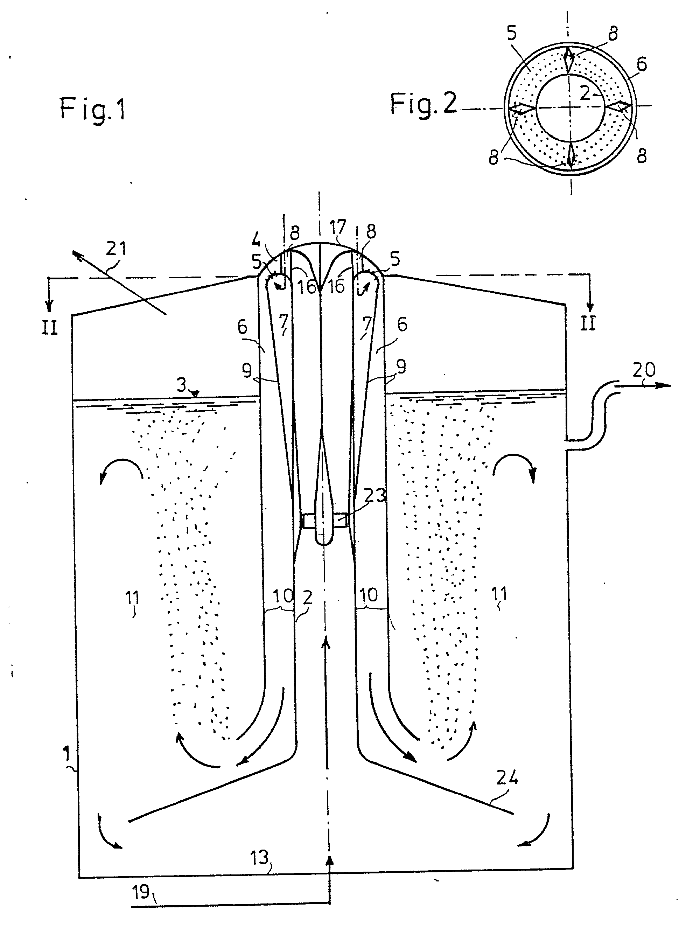

Die Erfindung ist in den Fig. 1 bis 7 anhand von vier Beispielen schematisiert dargestellt.

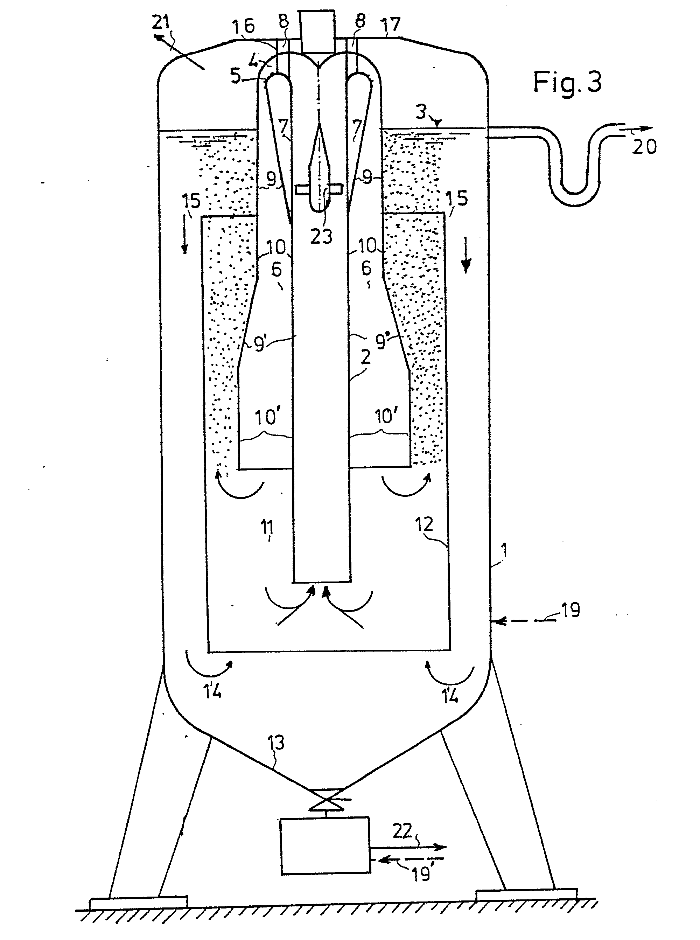

Es zeigt Fig. 1 einen Begasungsapparat für einen Behälter, wobei Fig. 2 einen Schnitt gemäß Schnittlinie II in Fig. 1 darstellt und Fig. 3 eine Konstruktionsvariante zu Fig. 1.

In Fig. 1 ist ein Behälter (1) dargestellt, der in seinem Zentrum ein Steigrohr (2) aufweist, durch welches die am Boden liegende, zu begasende Flüssigkeit durch die Pumpe (23) angesaugt und über den Flüssigkeitsspiegel (3) gehoben wird. Die Strömungsgeschwindigkeit der Flüssigkeit wird durch Kanalerweiterung im Steigrohr auf die geregelte Eintrittsgeschwindigkeit an der Begasungsstelle verlangsamt. An der höchsten Stelle des Steigrohres (2) erfolgt eine Umlenkung in einen Verteilkanal (4), dessen unterer Wandungsteil von einer Lochplatte (5) mit in Strömungsrichtung der Flüssigkeit hintereinander angeordneten Öffnungen gebildet ist. Unterhalb der Lochplatte (5) ist eine von Steigrohr (2) und Sinkkanal (6) begrenzte Gaskammer (7) vorgesehen, aus welcher das Gas durch Öffnungen der Lochplatte (5) in den Verteilkanal aufsteigt und Gasblasen bildet, die sich durch den Auftrieb von der Lochplatte loslösen. Die losgelösten Gasblasen werden durch die Strömungsgeschwindigkeit mitgenommen und steigen in der Flüssigkeit hoch. Die Strömungsgeschwindigkeit ist so bemessen, daß die Gasblasen während der Umlenkung in den Sinkkanal (6) nicht mit der oberen Kanalwandung (17) in Berührung kommen können. Insbesondere wird die Strömungsgeschwindigkeit im Kanal in Abhängigkeit der aus dem ersten überströmten Loch aufsteigenden Gasblasen so geregelt, daß am Endes des Kanales bzw. nach Durchströmung der nach unten gerichteten Umlenkung die Gasblasen 75 bis 95% des freien Strömungsquerschnittes in Richtung zur gegenüber liegenden Kanalwandung durchwandert haben, wodurch bereits vor der Umlenkung eine gleichmäßige Gasverteilung erreicht wird. In diesem Fall ist die Strömungsgeschwindigkeit im Krümmer kleiner als $\sqrt{R \cdot g}$, wobei R = Radius des Krümmers und g = Erdbeschleunigung, ist. Der Sinkkanal weist oben einen Erweiterungskonus (9) und anschließend einen zylindrischen Kanalabschnitt (10) auf, in welchem das Gas-Flüssigkeitsgemisch am Austritt des Sinkkanales (6) auf den herrschenden hydrostatischen Druck verdichtet wird. Der Sinkkanal (6) ist auf hohe Gaslösungsintensität bei geringstem Energieverbrauch ausgelegt. Das nicht gelöste Gas und zum Teil das gebildete Abgas steigt in der im Behälter befindlichen Flüssigkeit auf und bewirkt eine Umwälzung der Flüssigkeit im ringförmigen Flüssigkeitsraum (11).

Durch die Anordnung eines Ansaugtrichters (24) am unteren Ende des Ansaugrohres der Pumpe (23) wird die zu begasende Flüssigkeit aus der Randzone des Bodens des Behälters (1) dort entnommen, wo eine Abwärtsströmung stattfindet.

Das Steigrohr (2) ist im Behälter durch die Gaszuführungen (8) gehalten, indem die Gaszuführungen an der oberen Wandung des Verteilkanales (4) bzw. auch des Behälterdeckels (17) eingeschweißt sind, wodurch die Verbindung der Gaskammer (7) mit der Gasquelle, insbesondere Umgebungsluft, gegeben ist. Diese Gaszuführungen können auch als Rippen ausgebildet sein, die die Umlenkung des Flüssigkeitsstromes erleichtern. Die zu begasende Flüssigkeit wird durch die Zuführungsleitung (19) am Boden (13) des Behälters (1) eingeleitet. Die behandelte Flüssigkeit verläßt den Behälter (1) gemäß Pfeil (20), während das Abgas gemäß Pfeil (21) aus dem Gasraum oberhalb des Flüssigkeitsspiegels (3) entnommen wird.

In Fig. 2 ist ein Schnitt gemäß Schnittlinie II in Fig. 1 durch den oberen Teil des Steigrohres (2) im Bereich des Verteilkanales (4) dargestellt. Man erkennt die Gaszuführungskanäle (8), die durch die tragenden Rippen geführt sind, und die ringförmige Lochplatte (5), an welche sich nach außen der Sinkkanal (6) anschließt.

In Fig. 3 ist eine Konstruktionsvariante zu Fig. 1 dargestellt, bei der der Sinkkanal (6) einen oberen Erweiterungskonus (9) und einen unteren Erweiterungskonus (9′) aufweist. Zwischen beiden Erweiterungskonen (9, 9′) ist ein zylindrischer Teil (10) vorgesehen. Diese Maßnahme erlaubt eine höhere Wirtschaftlichkeit, indem der obere Sinkkanal (10) auf minimalen Energieverbrauch und der unterste Sinkkanal (10′) im Bereich des höchsten hydrostatischen Druckes und folglich höchster Gaslöslichkeit ausgelegt ist. Der Sinkkanal (6) ist dabei bis auf 75% der Tiefe der Flüssigkeit im Behälter (1) geführt, um die umgebenden Flüssigkeit im Behälter durch die aufsteigenden Gasblasen einen Strömungsimpuls zu geben. Zur Verbesserung der inneren Zirkulation im Behälter (1) gegenüber der Ausführung nach Fig. 1 ist ein Umwälzzylinder (12) vorgesehen, der die Aufwärtsströmung mit dem zahllosen Gasblasen von der Abwärtsströmung am Rande des Behälters trennt. Oberhalb und unterhalb des Umwälzzylinders (12) sind Ringräume (14, 15) vorgesehen, in welchen der Flüssigkeitsstrom umgelenkt wird. Der Boden (13) des Behälters (1) ist konisch ausgebildet, wodurch eine Schlammsammlung und eine Schlammabscheidung über die Leitung (22) ermöglicht wird.

Ein großer Vorteil dieser Konstruktionen wird darin gesehen, daß die Umwälzpumpe (13) jeweils leicht ausgetauscht werden kann, da sie als Tauchpumpe ausgebildet ist, deren Antrieb eventuell an der oberen Behälterwandung (17) vorgesehen ist, wobei die Kraftübertragung durch eine Kardanwelle durchgeführt wird. Wird der Antrieb im Bereich der Pumpe (23) vorgesehen, so kann der Antrieb durch eine stromlinienförmige Verkleidung strömungsgünstig angeordnet werden. Die Pumpe (23) ist hiebei so ausgelegt, daß die maximale Druckhöhe der Pumpe (23) einschließlich der hydraulischen Verluste zumindest bis zur Höhe des Krümmers des Hebers reicht. Dadurch bildet sich im Krümmer ein Unterdruck aus, der zur Ansaugung des zur Begasung notwendigen Gases verwendet wird, wobei durch Turbulenzen im Krümmer eine gleichmäßige Verteilung der Gasblasen über den ganzen Krümmerquerschnitt erfolgt. Diese Verteilung kann durch Fliehkrafteinwirkung der Flüssigkeit verstärkt werden, indem der Krümmer so ausgebildet ist, daß der Radius (R) des Krümmers kleiner ist als es der Gleichung $R = V^2/g$ entspricht (V = Strömungsgeschwindigkeit, g = Erdbeschleunigung). Dadurch kommt das unterschiedliche spezifische Gewicht der Gasblasen und der Flüssigkeit zur Wirkung und die Gasblasen werden nach unten gegen die Innenwandung des Krümmers gedrückt. Durch die Erniedrigung des hydrostatischen Druckes der im Steigrohr (2) strömenden Flüssigkeit wird das in der Flüssigkeit gelöste Gas ausgetrieben. Dieses zugeführte Gas, wie z. B. Luft oder $O_2$, bildet mit dem Gasanteil des entspannten Gases, z. B. $CO_2$, besonders kleine Blasen und somit eine große Stoffaustauschfläche. Bei Abwasseranlagen oder bei Gärapparaten sind die biologischen Abbauprodukte, wie z. B. $CO_2$, aus der Flüssigkeit zu entfernen. Würde man an der Stelle der Krümmung kein Frischgas zuführen, so würden sich die Abgasblasen zum Großteil mit steigendem hydrostatischen Druck im nach abwärts gerichteten Sinkkanal (6) wieder lösen, so daß die umgewälzte Flüssigkeit praktisch abgasgesättigt wäre und demgemäß nur weniger Sauerstoff aufnehmen könnte. Wird aber das austretende Gas an der Krümmung durch Frischgas (Luft) verdünnt, so kann sich neben der normalen Sauerstofflösung in der Flüssigkeit nur mehr verdünntes Abgas lösen. Die Partialdruckänderungen der an der Atmung der Bakterien beteiligten Gase an der Stelle des geringsten Flüssigkeitsdruckes und der Frischgaszuführung beschleunigt die Atmung der Bakterien und damit ihren Stoffwechsel, wodurch die Abbauleistung positiv beeinflußt wird. Die ungelösten Abgasblasen und auch die überschüssigen Luftblasen perlen im Behälter (1) aus und bewirken dort eine Umwälzung der Flüssigkeit nach dem Mammut-Pumpen-Prinzip. So wird die Flüssigkeit mit hohem Wirkungsgrad entgast und mit frischem Gas, welches in den meisten Fällen Sauerstoff oder Luft ist, versehen, um den biologischen Prozeß nicht zu unterbrechen.

Die Begasungsstelle könnte theoretisch auch im Steigrohr (2) weit vor der Krümmung angeordnet werden, doch hat dies den Nachteil, daß sich unter Umständen dann im Krümmer ein Gassack bildet, der zu Schwierigkeiten bzw. einer Blasenvergrößerung führt, wodurch die Gasabsorption im Sinkkanal (6) reduziert wird.

Die beschriebene Einrichtung eignet sich besonders zur Belüftung von Abwässern, wobei die Belüftungsintensität bis auf ein oder sogar mehr Kubikmeter Luft zu einem Kubikmeter Flüssigkeit gesteigert werden kann, wodurch die biologische Abbauwirkung der Bakterien bedeutend erhöht werden kann. Die Einrichtung kann aber auch zur Abgasneutralisation von Waschflüssigkeiten verwendet werden, wobei als Gas $CO_2$-haltiges, sauerstoffarmes Feuerungsabgas verwendet wird, welches naturgemäß mit geringem Überdruck anfällt.

Erfindungswesentlich ist die Begasung unmittelbar vor dem Krümmer, wodurch die in der Krümmung entstehenden Turbulenzen zur Dispergierung der Gasblasen im Flüssigkeitsstrom verwendet werden, so daß eine praktisch gleichmäßige Verteilung der Gasblasen erreicht wird. Gleichzeitig bewirkt die Zuführung von Frischgas an der Stelle der natürlichen Entgasung eine Verdünnung der durch Druckanstieg in der Flüssigkeit sich wieder lösenden Gase, so daß der Entgasungseffekt verstärkt wird.

Im Rahmen der Erfindung können ferner in dem Behälter nicht dargestellte blechförmige Einbauten vorgesehen werden, die das aufsteigende Gas umlenken und so die Verweilzeit der Gasblasen vereinheitlichen und auch die Durchmischung der begasten mit der nicht begasten Flüssigkeit im Behälter verbessern.

## Patentansprüche

1. Verfahren zur Be- und Entgasung von in Rohren strömenden Flüssigkeiten, insbesondere beim biologischen Abbau hochbelasteter Abwässer, bei dem die Flüssigkeit von einem gegebenen hydrostatischen Druckniveau durch Heben auf ein geringeres hydrostatisches Druckniveau entspannt und nach einer Umlenkung die begaste Flüssigkeit über ein Fallrohr in einen Behälter oder ein Becken mit den gleichmäßig verteilten, verdichteten und zum Teil gelösten Gasblasen rückgeführt sowie ungelöstes Gas abgegeben wird, dadurch gekennzeichnet, daß das Gas im Unterdruckbereich der entspannten Flüssigkeit unmittelbar vor der Umlenkung in den Sinkkanal an mehreren in bekannter Weise in Strömungsrichtung hintereinander liegenden Stellen bläschenförmig durch die Rohrwandung in den Randbereich der Flüssigkeit eingebracht wird.

2. Verfahren nach Anspruch 1, dadurch gekennzeichnet, daß die Begasung oberhalb einer Lochplatte von unten erfolgt, durch welche Gasblasen mit einem Blasendurchmesser von 3 mm–10 mm in die Flüssigkeit eingebracht werden, wobei die Strömungsgeschwindigkeit im Kanal in Abhängigkeit der aus dem ersten überströmten Loch aufsteigenden Gasblasen so geregelt wird, daß am Ende des Kanales bzw. nach Durchströmung der nach unten gerichteten Umlenkung die Gasblasen 75 bis 95% des freien Strömungsquerschnittes in Richtung zur gegenüber liegenden Kanalwandung durchwandert haben.

3. Verfahren nach Anspruch 1, dadurch gekennzeichnet, daß die Strömungsgeschwindigkeit der Flüssigkeit durch Kanalerweiterung im Steigrohr auf die geregelte Eintrittsgeschwindigkeit an der Begasungsstelle verlangsamt wird.

4. Einrichtung zur Durchführung des Verfahrens nach mindestens einem der Ansprüche 1 bis 3 mit mindestens einer für die Flüssigkeit eines Behälters vorgesehenen Umwälzleitung und Umwälzpumpe, wobei der obere Teil des Steigrohres (2) der Umwälzleitung bzw. des Krümmers zum Sinkkanal (6) oberhalb des Flüssigkeitsspiegels (3) und der untere Teil des Sinkkanales (6) in die Flüssigkeit des Behälters (1) oder Beckens eintauchend ausgebildet ist, dadurch gekennzeichnet, daß die Umwälzleitung als zentrales vertikales Steigrohr (2) mit konzentrisch hiezu angeordneten, in Strömungsrichtung sich erweiternden Sinkkanal (6) und als ringförmigen Verteilkanal (4) ausgebildeten Krümmer ausgebildet ist, an dessen Unterseite ein ringförmiger poröser Wandungsteil wie z. B. Lochplatte (5) vorgesehen ist, der über eine ringförmige Gaskammer (7), die unmittelbar vor der Umlenkung des Flüssigkeitsstromes angeordnet ist, mit mindestens einer Gaszuführung (8) verbunden ist.

5. Einrichtung nach Anspruch 4, dadurch gekennzeichnet, daß die Lochplatte (5) durch Rippen (16), die zumindest teilweise hohl und als Gaszuführung (8) ausgebildet sind, an der oberen Kanalwandung (17) des Verteilkanales (4) gehalten ist.

## Claims

1. Process for the gasification and degasification of liquids flowing in tubes particularly for biological decomposition of heavily polluted waste water during which the liquid's given hydrostatic pressure level is relieved by raising the liquid in order to reach a lower hydrostatic pressure level, deviated, gasified and recirculated via a downpipe into a tank or a basin with equally distributed compressed and partially dissolved gas bubbles as well as undissolved gas is released, characterized in that the gas in the reduced pressure range of the relieved liquid is introduced immediately before the deviation to the downpipe at several points which are located in the well-known manner one behind the other in form of bubbles penetrating the tube wall into the peripheral area of the liquid.

2. Process according to claim 1, characterized in that the gasification takes place above a perforated disk introducing gas bubbles with a diameter of 3 mm–10 mm from below into the liquid, whereby the flow rate in the tube is regulated as a function of the gas bubbles rising from the first hole through which the gas flows so that at the end of the tube and after having flowed through the downward directed deviation the gas bubbles have passed 75 to 95% of the free flow diameter in the direction of the opposite tube wall.

3. Process according to claim 1, characterized in that by enlarging the tube in the rising pipe the flow rate of the liquid is reduced to the regulated inlet rate at the gasification point.

4. Installation for carrying out the process according to at least one of the claims 1 to 3 with at least one circulation pipe and circulation pump provided for the liquid of one tank, whereby the upper part of the rising pipe (2) of the circulation pipe and of the deviation to the downpipe (6) is located above the liquid level (3) and the lower part of the downpipe (6) is submerged in the liquid of the tank (1) or the basin, characterized in that the circulation pipe has been designed as a central vertically rising pipe (2) with a concentric downpipe (6) widening in the direction of the flow and as deviation shaped as annular distributing tube on the bottom of which an annular porous wall such as a perforated plate (5) has been provided which via an annular gas chamber (7) located immediately before the deviation of the liquid flow is linked with at least one gas supply (8).

5. Installation according to claim 4, characterized in that the perforated plate (5) is fixed on the upper wall (17) of the distributing tube (4) by at least partially hollow ribs (16) which are constructed as gas supply (8).

**Revendications**

1. Procédé pour la gazéification et le dégazage de liquides qui coulent dans des tubes en particulier pour la décomposition biologique d'eaux usées fortement polluées au cours de laquelle le liquide est détendu en le soulevant d'un niveau de pression hydrostatique donné à un niveau de pression hydrostatique réduit et après une dérivation le liquide gazéifié passe par un tuyau de descente et est recyclé dans un récipient ou un bassin qui contient les bulles de gaz uniformément distribuées, comprimées et partiellement dissoutes ainsi que le gaz non dissous est dégagé, caractérisé en ce que le gaz dans la zone de dépression du liquide détendu est introduit dans la zone marginale du liquide sous forme de bulles traversant la paroi du tube à plusieurs points disposés de manière connue l'un derrière l'autre dans la direction d'écoulement immédiatement avant la dérivation dans le tuyau de descente.

2. Procédé suivant revendication 1, caractérisé en ce que la gazéification se fait en dessus d'un disque perforé à travers lequel les bulles de gaz d'un diamètre de 3 mm–10 mm sont introduites d'en bas dans le liquide, la vitesse d'écoulement dans le tuyau étant réglée en fonction des bulles de gaz montant du premier trou passé de telle manière qu'à la fin du tuyau et après avoir passé la dérivation orientée vers le bas les bulles de gaz ont traversé 75 à 95% de la section libre d'écoulement dans la direction de la paroi opposée du tuyau.

3. Procédé suivant revendication 1, caractérisé en ce que la vitesse d'écoulement du liquide est réduite par un élargissement du tuyau ascendant afin d'obtenir la vitesse d'admission réglée au point de gazéification.

4. Installation pour l'exécution du procédé suivant au moins une des revendications 1 à 3 avec au moins une conduite de circulation et pompe de circulation prévues pour le liquide d'un récipient, la partie supérieure du tuyau ascendant (2) de la conduite de circulation ou de la dérivation vers le tuyau de descente (6) étant arrangée au dessus du niveau du liquide (3) et la partie inférieure du tuyau de descente (6) étant arrangée de manière immergée dans le liquide du récipient (1) ou du bassin, caractérisée en ce que la conduite de circulation est construite comme tuyau ascendant central et vertical (2) avec tuyau de descente (6) concentrique qui s'élargit dans la direction d'écoulement et avec une dérivation construite comme tuyau de distribution annulaire (4) sur la face inférieure duquel une partie annulaire poreuse de la paroi est prévue comme par exemple un disque perforé (5) qui est lié avec au moins une alimentation de gaz (8) par une chambre à gaz annulaire (7) arrangée immédiatement avant la dérivation du courant de liquide.

5. Installation suivant revendication 4, caractérisée en ce que le disque perforé (5) est fixé à la paroi supérieure (17) du tuyau de distribution (4) par des nervures (16) qui sont au moins partiellement creuses et construites comme alimentations de gaz (8).

Fig.1

Fig.2

Fig. 3